# EUROPEAN PATENT APPLICATION

(11) **EP 1 921 625 A1**
(43) Date of publication of application: **14.05.2008**
(21) Application number: 06796991.5
(22) Date of filing: 29.08.2006
(51) Int. Cl.: G11B 27/00, G11B 20/10, G11B 20/12, H04N 5/91

(54) **RECORDER, RECORDING METHOD, REPRODUCING DEVICE, REPRODUCING METHOD, PROGRAM, AND RECORDING MEDIUM**

(30) Priority: 29.08.2005 JP 2005246963
(71) Applicant: Sony Corporation, Tokyo (JP)
(72) Inventor: KAWATE, Fumitaka, Tokyo 141-0001 (JP); HIRABAYASHI, Mitsuhiro, Tokyo 141-0001 (JP)
(74) Representative: Horner, David Richard
(86) International application number: PCT/JP2006/317014
(87) International publication number: WO 2007/026718

(57) **Abstract**

An optical disk stores a content file and an index file for managing the content file. A property file FP in the index file includes a file entry corresponding to the content file and a decode-information storage area (system information entry) in which decode information of the content file (AV profile entry) is stored. The file entry has pointer information (profile entry index) indicative of decode information of a corresponding content file stored in the decode-information storage area.

## Description

### Technical Field

The present invention relates to a recording apparatus, a method for recording, a reproducing apparatus, a method for reproduction, a program, and a recording medium for recording a content file and an index file for managing the content file on a recording medium or for reproducing the content file from the recording medium.

Specifically, the invention relates to a recording apparatus and so on in which the index file has a decode-information storage area for collectively storing information on the decoding of content files recorded on a recording medium, and in which the entries of the index file corresponding to the content files and assigned attribute information of the corresponding content files have pointer information indicative of corresponding decode information in the decode-information storage area so that detailed decode information of the content files can be recorded without a significant increase in the size of the index file, thereby allowing accurate determination whether the content files can be reproduced.

### Background Art

Methods for easily finding a desired file from a large number of files recorded on a mass-storage recording medium by using an index file are proposed in Patent Documents 1, 2, 3, and so on.

Index files are for managing content files and have a set of attribute information of the content files. The attribute information of a content file includes thumbnail picture data, title text data, the date of photo shooting, codec information, and face information (face size, face position, and digitized face score).

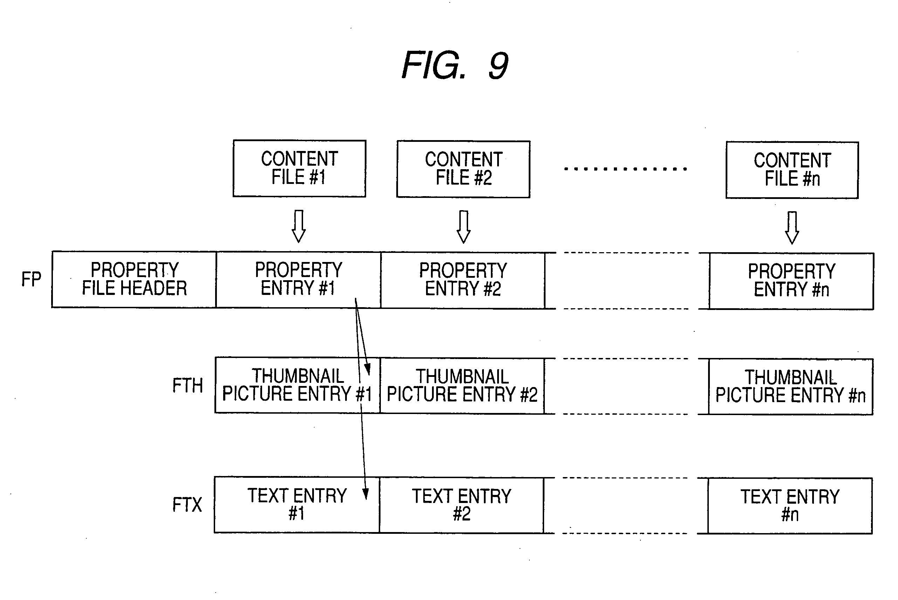

As shown in Fig. 9, the index file includes a text file (or a meta-data file) FTX, a thumbnail picture file FTH, and a property file FP. The attribute information of the content file is divided into the text file FTX, the thumbnail picture file FTH, and the property file FP.

However, some types of content file have no attribute information disposed in the text file FTX and the thumbnail picture file FTH, so that they sometimes have no entry. Fig. 9 shows a case in which each content file has attribute information for the text file FTX, the thumbnail picture file FTH, and the property file FP.

Here the index file composed of a property file, a thumbnail picture file, and a text file (or a meta-data file) is particularly referred to as an AV-Index file.

The text file FTX manages text information (meta-data for a meta-data file) . The thumbnail picture file FTH manages thumbnail picture data. The property file FP manages attribute information (basic attribute information) except attribute information on the text file FTX or the thumbnail picture file FTH, and also manages information on the connection among the slots of other files.

The property file FP has a header indicative of its attribute at its head. In contrast, the text file FTX and the thumbnail picture file FTH have no header at their heads. However, the text file FTX and the thumbnail picture file FTH sometimes have a header indicative of their attribute at their heads, as with the property file FP. Following the header, the content files have continuous entries including their attribute information (a property entry #1, a property entry #2, ---, a thumbnail picture entry #1, a thumbnail picture entry #2, ----, or a text entry #1, a text entry #2, -----).

The entries of the text file FTX are assigned data indicative of character strings of disc titles or the titles of the content files. The entries of the thumbnail picture file FTH are assigned thumbnail picture data indicative of disc titles or the content of the content files.

The entries of the text file FTX and the thumbnail picture file FTH each include fixed-length slots. The number of slots of each entry is one or more according to the amount of attribute information assigned to the entry. Since the type of attribute information depends on the type of content file, no entry is sometimes provided, as described above.

The entries of the property file FP are assigned data indicative of the disc title or the attribute of the content files, respectively. The property file FP includes fixed-length slots as with the text file FTX and the thumbnail picture file FTH. The property file FP always has entries corresponding to the content files even if the type of the content files varies.

The entries of the property file FP have management information (relation information indicated by the arrows in Fig. 9) that specifies the corresponding entries of the text file FTX and the thumbnail picture file FTH as management information indicative of the relation with other entries. The entries of the property file FP each including a plurality of slots have management information that specifies the slots following the previous slots. The entries of the property file FP also have information that specifies a corresponding content file.

The index file has the above structure. Therefore, for example, the titles of the content files recorded on a recording medium 2 can be displayed in list form by reproducing the data row recorded on the text file FTX. Moreover, for example, the thumbnail pictures of the content files recorded on the recording medium 2 can be displayed in list form by reproducing the data row recorded on the thumbnail picture file FTX.

The index file can be defined not only for the existent content files but also for virtual folders by the text file FTX, the thumbnail picture file FTH, and the property file FP. The entries of the property file FP also have information that defines the hierarchical structure of the content files and the virtual folders.

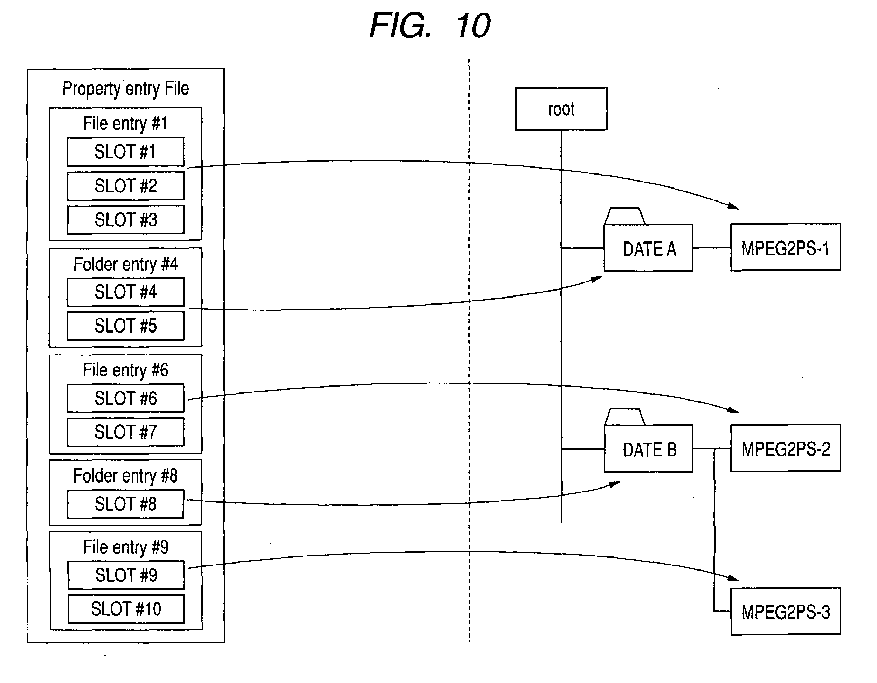

Fig. 10 shows an example of the correspondence between the property file and the content files and virtual folders. In this example, a virtual folder with the date of picture shooting of "Date A" and a virtual folder with the date of picture shooting of "Date B" are present on the same level; a content file of "MPEG2PS-1" is present on a level lower than the virtual folder of "Date A"; and content files of "MPEG2PS-2" and "MPEG2PS-3" are present on a level lower than the virtual folder of "Date B".

In correspondence with such a hierarchical structure, the property file includes a file entry #1, a folder entry #4, a file entry #6, a folder entry #8, and a folder entry #9, as shown in Fig. 10. The number of each entry is the number of the first slot thereof. In the example illustrated, the number of each entry is set at the smallest number of the slots of the entry for convenience.

The file entries #1, #6, and #9 manage the content files of "MPEG2PS-1", "MPEG2PS-2", and "MPEG2PS-3", respectively, while the folder entries #4 and #8 manage the virtual folders of "Date A" and "Date B", respectively.

Recording media such as optical discs are sometimes written various content files when loaded in various devices. In this case, it is sometimes difficult for a device with low decoding performance to decode any of the various-format content files recorded on the recording media. In that case, when such hard-to-decode content files are displayed in the list of thumbnail pictures, the ease-of-use is decreased.

The above-described Patent Document 2 discloses a method of recording decode information of the content files stored in a recording medium in advance on the corresponding entries of the index file and then determining whether the content file can be decoded on the basis of the record. Patent Document 2 also discloses a method for recording the decode information in coded form.
Patent Document 1: JP-A-2004-227630
Patent Document 2: JP-A-2004-227633
Patent Document 3: JP-A-2005-115815

### Disclosure of the Invention

### Problems that the Invention is to Solve

There is various decode information. Examples of information on the decoding of video data include the type of codec, the profile type of codec, the level, the bit rate, and the screen size. Examples of information on the decoding of audio data include the type of codec, the profile type of codec, the level, the bit rate, and the sampling frequency.

When such information is necessary for decoding, if 4 bytes are assigned to one piece of information, at least 32 bytes are needed for one content. Accordingly, when many content files are registered in an index file, the size of the index file increases significantly.

The decode information per content can be set at about 4 bytes by coding the decode information. However, this makes the decode information extremely rough because the combination of the above information is expressed in limited codes (e.g., 4 bytes). Moreover, when a new type of codec, profile, bit rate, or the like is added, it is difficult for some assigned codes to assign appropriate codes thereto. Furthermore, since it is impossible to recognize the meaning of a new assigned code with a device manufactured before the new code is assigned, the device will determine that the content file cannot be reproduced despite its reproducing capability.

Accordingly, it is an object of the present invention to allow detailed recording of decode information of content files to some extent without a major increase in the size of the index file, thereby permitting accurate determination whether the content files can be reproduced.

### Means for Solving the Problems

A concept of the invention is a recording apparatus for recording a content file including at least encoded video data or encoded audio data and an index file for managing the content file and including a set of attribute information of the content file on a recording medium, the recording apparatus comprising:
a content-file recording section for recording the content file on the recording medium; and
an index-file updating section for updating the index file so as to register a desired content file when the content file is recorded on the recording medium by the content-file recording section; wherein
the index file includes a predetermined number of entries corresponding to the content file recorded on the recording medium and assigned the attribute information of the corresponding content file and a decode-information storage area for storing decode information of the content file;
the predetermined number of entries have pointer information indicative of decode information of the corresponding content file from among the decode information stored in the decode-information storage area; and
the index-file updating section adds an entry to the index file when updating the index file so as to register the content file, the entry being corresponding to the content file and having pointer information indicative of the decode information of the content file stored in the decode-information storage area.

A concept of the invention is a reproducing apparatus for reproducing a desired content file from a recording medium on which a content file including at least encoded video data or encoded audio data and an index file for managing the content file and including a set of attribute information of the content file are recorded, wherein
the index file includes a predetermined number of entries corresponding to the content file recorded on the recording medium and assigned the attribute information of the corresponding content file and a decode-information storage area for storing all the decode information of the content file; and
the predetermined number of entries have pointer information indicative of decode information of the corresponding content file from among the decode information stored in the decode-information storage area; and wherein the reproducing apparatus comprises:
a content-file reproducing section for reproducing a desired content file from the recording medium to acquire video data or audio data contained in the content file; and
an index-file reproducing section for reproducing the index file from the recording medium;
wherein the content-file reproducing section determines whether the content file can be reproduced with reference to the decode information on the basis of the pointer information.

According to the invention, at least a content file and an index file are recorded on a recording medium. The index file manages the content file and includes a set of attribute information of the content file. The content-file recording section records the content file on the recording medium.

When a content file is recorded on a recording medium by the content-file recording section, the index file recorded on the recording medium is updated by the index-file updating section. Since the index file is updated, the index file stored in the recording medium and the content file are agreed with each other.

The index file includes entries corresponding to the content file recorded on the recording medium and a decode-information storage area in which all the decode information of the content file is stored. The entries are assigned the attribute information of the corresponding content file, and have pointer information indicative of decode information of the corresponding content file from among the decode information stored in the decode-information storage area.

When a desired content file is recorded on the recording medium, the index file is updated so that the content file is registered. At that time, an entry corresponding to the content file is added to the index file. The entry is given pointer information indicative of the decode information of the corresponding content file.

Thus, all the decode information of the content files recorded on the recording medium is stored in the decode-information storage area of the index file; and the entries of the index file corresponding to the content file have pointer information indicative of the corresponding decode information in the decode-information storage area. This prevents duplicate recording of the same decode information on the index file, and allows decode information to be recorded without being coded. Therefore, detailed decode information of the content file can be recorded without a significant increase in the size of the index file.

For example, when updating the index file so as to register the desired content file, the index-file updating section adds the decode information of the content file to the decode-information storage area when the decode information of the content file is not stored in the decode-information storage area. Since new decode information can thus be added to the decode-information storage area, the invention is also suitable for recording a content file that is not stored in the decode-information storage area and that does not correspond to the decode information on a recording medium.

For example, it is also possible that when decode information is stored in the decode-information storage area, the decode information being different in bit rate or frame rate from the decode information of the desired content file and having a bit rate or a frame rate that is obtained by rounding up a predetermined digit of the bit rate or the frame rate of the decode information of the content file, the index-file updating section determines that decode information of the content file is stored in the decode-information storage area. This allows all the decode information to be expressed collectively, thus reducing the size of the index file.

According to the invention, a desired content file is selectively reproduced from a recording medium by the content-file reproducing section. In this case, it is determined whether the content file can be reproduced on the basis of the decode information in the decode-information storage area which is indicated by the pointer information of the entry of the index file corresponding to the content file, the index file being reproduced by the index-file reproducing section. Thus, a determination of reproducibility can be made on the basis of the decode information itself corresponding to the content file, allowing accurate determination whether the content file can be reproduced.

For example, the content-file reproducing section determines whether the content file can be reproduced for each decode information stored in the decode-information storage area of the index file, and stores the result of determination in a predetermined storage area in association with the pointer information. When reproducing a desired content file from the recording medium, the content-file reproducing section determines whether the content file can be reproduced on the basis of the determination result stored in the predetermined storage area in association with the pointer information of the entry of the index file corresponding to the content file. In this case the determination stored in a predetermined storage area can be used, allowing high-speed determination whether the content file can be reproduced.

### Advantage of the Invention

According to the invention, the index file has a decode-information storage area for storing all the decode information of the content file stored in a recording medium; the index file also has entries corresponding to the content file and assigned attribute information of the corresponding content file, the entries having pointer information indicative of decode information of the decode-information storage area. This allows detailed decode information of the content file to be recorded without a significant increase in the size of the index file, thereby permitting accurate determination whether the content file can be reproduced.

### Brief Description of the Drawings

Fig. 1 is a block diagram showing the structure of an optical disk unit;
Fig. 2 is a diagram showing that a property file has a system information entry and a plurality of file entries;
Fig. 3 is a diagram showing the structure of a profile data list of a system information entry.
Fig. 4 is a diagram showing the structure of an AV profile entry assigned to the profile data list;
Fig. 5 is a diagram showing the structure of a video profile entry of the AV profile entry;
Fig. 6 is a diagram of the structure of an audio profile entry of the AV profile entry;
Fig. 7 is a flowchart for the procedure of a system control microcomputer in a content-file recording mode;
Fig. 8 is a flowchart for the procedure of the system control microcomputer in a content-file reproducing mode;
Fig. 9 is a diagram for explaining a text file, a thumbnail picture file, and a property file of an index file; and
Fig. 10 is a diagram of an example of the correspondence among a property file, virtual files, and content files.

### Description of Reference Numerals and Signs

1: optical disk unit, 2: optical disk, 11: video encoder, 12: audio encoder, 13: video decoder, 14: audio decoder, 15: file generator, 16: file decoder, 17, 20: memory, 18: memory controller, 19: system control microcomputer, 21: error-collection encoder/decoder, 22: drive control microcomputer, 23: modem, 24: magnetic-field modulation driver, 26: operating section

### Best Mode for Carrying Out the Invention

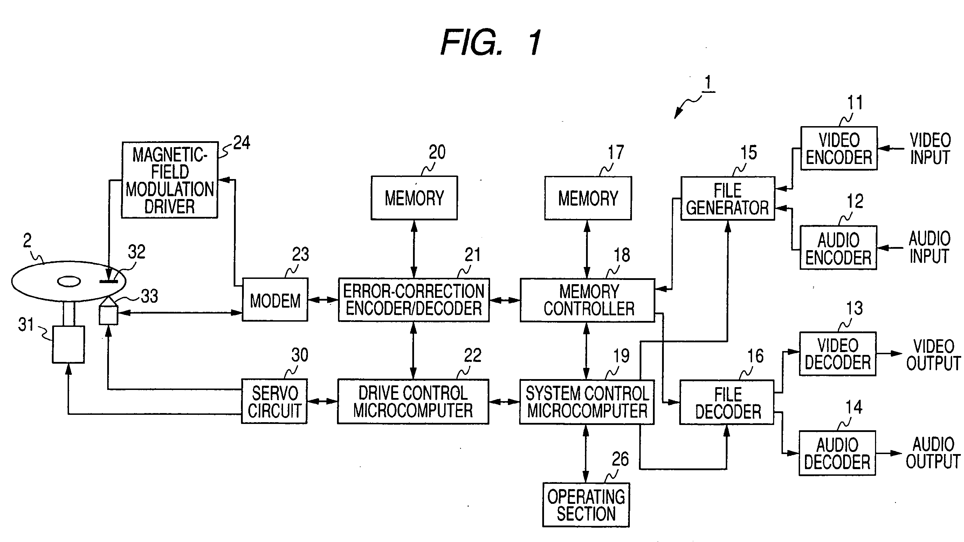

An embodiment of the invention will be described. Fig. 1 shows the structure of an optical disk unit 1 according to the embodiment.

The optical disk unit 1 acquires the video signal and the audio signal of an object with an image pickup means and an audio acquisition means (not shown), respectively, and records the content of the video signal and the audio signal on an optical disk 2 as a content file. The optical disk unit 1 reproduces the content file recorded on the optical disk 2, and outputs it with a display means of a liquid-crystal display panel and an audio output means of a speaker or to an external device. The optical disk unit 1 encodes the video signal and the audio signal according to the Moving Picture Experts Group (MPEG) format, and then records them on the optical disk 2 in a specified file format.

The optical disk unit 1 includes the optical disk 2, a video encoder 11, an audio encoder 12, a video decoder 13, an audio decoder 14, a file generator 15, a file decoder 16, a memory 17, a memory controller 18, a system control microcomputer (hereinafter, referred to as "a system control microcomputer") 19, a memory 20, an error-collection encoder/decoder 21, a drive control microcomputer (hereinafter, referred to as "a drive control microcomputer") 22, a modem 23, a magnetic-field modulation driver 24, an operating section 26, a servo circuit 30, a spindle motor 31, a magnetic field head 32, and an optical pickup 33. The optical disk 2 is a recording medium.

The video encoder 11 converts the video signal resulting from video shooting from analog to digital to generate video data, encodes the video data according to MPEG format, and output the elementary stream of the video data. The audio encoder 12 converts an audio signal on the video shooting from analog to digital to generate audio data, encodes the audio data according to the MPEG format, and outputs the elementary stream of the audio data.

In the recording mode, the file generator 15 multiplexes the elementary streams output from the video encoder 11 and the audio encoder 12 to generate a content file in a specified file format under the control of the system control microcomputer 19.

The memory controller 18 switches its operation between recording and reproduction by the control of the system control microcomputer 19. In the recording mode, the memory controller 18 sequentially records the data row of the content files output from the file generator 15 and various data output from the system control microcomputer 19 on the memory 17 and temporarily stores them, and outputs the stored data according to the following process of the error-collection encoder/decoder 21. In the reproducing mode, the memory controller 18 sequentially records the data output from the error-collection encoder/decoder 21 on the memory 17 and temporarily stores them, and outputs the data row of the content files to the file decoder 16, and outputs the various data to the system control microcomputer 19.

The error-collection encoder/decoder 21 switches its operation between recording and reproduction by the control of the system control microcomputer 19. In the recording mode, the error-collection encoder/decoder 21 temporarily stores the data output from the memory controller 18 in the memory 20, and adds an error-correcting code thereto. The error-collection encoder/decoder 21 reads the data stored in the memory 20 in a predetermined order in the recording mode, and outputs the data subjected to interleave to the modem 23.

In the reproduction mode, the error-collection encoder/decoder 21 temporarily stores the data output from the modem 23 in the memory 20 in a predetermined order to thereby perform an interleaving process and error correction with the error-correcting code added during recording. In the reproduction mode, the error-collection encoder/decoder 21 reads the data stored in the memory 20 in the same order as that in recording, and outputs it to the memory controller 18.

The modem 23 switches its operation between recording and reproduction by the control of the system control microcomputer 19. In the recording mode, the modem 23 converts the data output from the error-collection encoder/decoder 21 to a serial data row, modulates it, and outputs it to the magnetic-field modulation driver 24 or the optical pickup 33. In the reproduction mode, the modem 23 reproduces a clock from the reproducing signal output from the optical pickup 33, and decides the binary level of the reproducing signal with reference to the clock to demodulate it. The modem 23 thus acquires reproduced data corresponding to the serial data row generated in the recording mode, and outputs the reproduced data to the error-collection encoder/decoder 21.

When the optical disk 2 is a magnetooptical disk, in the recording mode, the magnetic-field modulation driver 24 drives the magnetic field head 32 according to the signal output from the modem 23 by the control of the system control microcomputer 19. The magnetic field head 32 is opposed to the optical pickup 33 with the optical disk 2 therebetween, and applies a modulation magnetic field according to the data output from the modem 23 to the position to be irradiated with the laser beam from the optical pickup 33. Accordingly, when the optical disk 2 is a magnetooptical disk, the optical disk unit 1 records content files etc. on the optical disk 2 by the method of thermomagnetic recording.

The optical disk 2 is a rewritable optical disk such as a magneto optical disk (MO) or a phase-change disk. The spindle motor 31 rotates the optical disk 2 by the control of the servo circuit 30 under the condition of constant linear velocity (CLV), constant angle velocity (CAV), or zone constant velocity (ZCLV) depending on the type.

The servo circuit 30 controls the operation of the spindle motor 31 according to various signals output from the optical pickup 33. The servo circuit 30 also controls the tracking operation and the focusing operation of the optical pickup 33 according to various signals output from the optical pickup 33, and the seek operation of the optical pickup 33 and the magnetic field head 32, and furthermore executes a focus searching operation and so on.

The drive control microcomputer 22 controls the seek operation and so on of the servo circuit 30 according to the instruction from the system control microcomputer 19.

The optical pickup 33 applies a laser beam to the optical disk 2 and receives its returned light with a photoreceptor, and calculates the result of photoreception of the photoreceptor to output various control signals, and also outputs a reproducing signal whose level varies according to the bit string or mark string formed on the optical disk 2.

The optical pickup 33 switches its operation by the control of the system control microcomputer 19. When the optical disk 2 is a magnetooptical disk, the optical pickup 33 intermittently increases the amount of the laser beam applied to the optical disk 2 in the recording mode.. In this case, the optical disk unit 1 records content files on the optical disk 2 by a pulse train method. When the optical disk 2 is a phase change disk, the optical pickup 33 increases the amount of the laser beam to be applied to the optical disk 2 from that for reproduction to that for writing operation according to the data output from the modem 23. In this case, the optical disk unit 1 records content files on the optical disk 2 by the method of thermography.

The file decoder 16 inputs the data of the content files output from the memory controller 18, and divides the data into the elementary streams of video data and audio data, and outputs them. The video decoder 13 extends the elementary stream of the video data output from the file decoder 16, and outputs it to a display means or an external device (not shown). The audio decoder 14 extends the elementary stream of the audio data output from the file decoder 16, and outputs it to an audio output means or an external device (not shown).

The operating section 26 includes various operators and a touch panel on the liquid-crystal display panel in the optical disk unit 1, which notifies the system control microcomputer 19 of various operations by the user.

The system control microcomputer 19 is for controlling the entire operation of the optical disk unit 1. The system control microcomputer 19 controls the entire operation by executing a predetermined processing program stored in a memory (not shown) . In this embodiment, the processing program for the system control microcomputer 19 is installed in the optical disk unit 1 in advance. Alternatively, in place of the pre-installation, this processing program may either be downloaded via a network such as the Internet or recorded on a recording medium such as an optical disk, a magnetic disk, or a memory card.

For example, upon detection of the loading of the optical disk 2, the system control microcomputer 19 makes the optical pickup 33 seek around the innermost circumference of the optical disk 2 to reproduce the management information of the file management system of the optical disk 2 by the execution of the processing program. The system control microcomputer 19 acquires the reproduced management information from the memory controller 18, and stores it in a built-in memory.

The system control microcomputer 19 finds the addresses of the files recorded on the optical disk 2 and free space on the basis of the management information stored in the built-in memory. The system control microcomputer 19 reproduces the index file recorded on the optical disk 2 according to the management-information search result, and presents the various content files recorded on the optical disk 2 to receive user's operation. The index file reproduced from the optical disk 2 is stored in the built-in memory of the system control microcomputer 1 or in the memory 17. In this embodiment, the index file is stored in the built-in memory.

When the user gives an instruction to record an image pickup result, the system control microcomputer 19 detects free space according to the management information stored in the built-in memory, makes the optical pickup 33 seek in the free space, and records the picture content file on the optical disk 2.

The system control microcomputer 19 updates the management information stored in the built-in memory according to the record of the content file, and updates the management information recorded on the optical disk 2 according to the updated management information at the time of unloading the optical disk 2. The system control microcomputer 19 executes the update of the management information by outputting the updated management information stored in the built-in memory to the error-collection encoder/decoder 21 via the memory controller 18.

When recording the content file on the optical disk 2, the system control microcomputer 19 outputs various information necessary for generating the content file to the file generator 15. The system control microcomputer 19 acquires information necessary for generating the index file via the video encoder 11, the audio encoder 12, and the file generator 15. The system control microcomputer 19 updates the index file stored in the built-in memory in correspondence with the recording of the content file on the optical disk 2 on the basis of the acquired information and the information output to the file generator 15, and updates the index file recorded on the optical disk 2 according to the updated data of the index file.

In this case, the system control microcomputer 19 updates the index file in correspondence with the recording of the content file stored in the built-in memory by adding the entries corresponding to the content file recorded on the optical disk 2 to the index file.

The operation of the optical disk unit 1 shown in Fig. 1 will be briefly described.

When the optical disk 2 is loaded after the power of the apparatus main body is turned on or when the power is turned on after the optical disk 2 has been loaded, the optical pickup 33 is controlled so as to seek around the innermost circumference of the optical disk 2, and the management information of the file management system is reproduced from the optical disk 2. The management information is stored in the memory built in the system control microcomputer 19 via the memory controller 18. The system control microcomputer 19 finds the addresses of the files recorded on the optical disk 2 and free space on the basis of the management information stored in the built-in memory. After the management information is acquired, an index file is reproduced from the optical disk 2 on the basis of the management-information search result. The index file is stored in the memory built in the system control microcomputer 19.

The operation of recording the picture content file on the optical disk 2 will be described.

The video data acquired by the image pickup means and the audio data acquired by the audio acquisition means are encoded by the video encoder 11 and the audio encoder 12, respectively, and supplied to the file generator 15. The file generator 15 multiplexes the elementary stream of the video data acquired by the video encoder 11 and the elementary stream of the audio data acquired by the audio encoder 12 to generate a content file in a predetermined file format.

The content file is recorded on a free space of the optical disk 2 via the recording system configured by the memory controller 18, the error-collection encoder/decoder 21, the modem 23, the magnetic-field modulation driver 24, and the optical pickup 33.

In parallel with the content-file recording process, thumbnail picture data is generated from the video data. The system control microcomputer 19 updates the data of the index file stored in the built-in memory on the basis of the attribute information of the content file to be recorded such as the thumbnail picture data and the file name.

As described above, after the content file is recorded on the optical disk 2, the index file stored in the optical disk 2 is updated according to the data of the index file updated in correspondence with the recording of the content file, the data being stored in the built-in memory of the system control microcomputer 19.

The index file includes entries corresponding to the content files recorded on the optical disk 2 and a decode-information storage area in which all the decode information of the content files is stored. The entries are assigned attribute information on the corresponding content files and have pointer information indicative of the decode information of the corresponding content files of the decode information stored in the decode-information storage area.

When a content file is recorded on the optical disk 2, the index file is updated so as to register the specified content file. At that time, an entry corresponding to the specified content file is added to the index file. The entry is given pointer information indicative of the decode information of the specified content file.

The management information stored in the built-in memory of the system control microcomputer 19 is updated in correspondence with the recording of the content file. After the index file has been updated or when the optical disk 2 is unloaded, the management information recorded on the optical disk 2 is updated on the basis of the updated management information.

The operation of reproducing a content file with reference to a list of the content files recorded on the optical disk 2 will be described.

When the user gives an instruction to display a list of content files, thumbnail picture data corresponding to the content files is sequentially acquired from the data of the index file stored in the built-in memory of the system control microcomputer 19, and the thumbnail picture data in list form is supplied from the system control microcomputer 19 to a display means (not shown) via the file decoder 16 and the video decoder 13. The display means displays the list of the thumbnail pictures of the content files recorded on the optical disk 2.

The system control microcomputer 19 reproduces the index file from the optical disk 2 and stores it in the built-in memory, as described above, and then determines whether the content file can be reproduced by the optical disk unit 1 every decode information stored in the decode-information storage area of the index file. The determination is stored in a predetermined storage area in association with pointer information (indicative of decode information in the decode-information storage area). The content files to be displayed in list form include all the content files recorded on the optical disk 2 or only content files that are determined to be reproducible.

When the user selects a thumbnail picture and gives an instruction to reproduce it with thumbnail pictures displayed in list form on the display means, a content file corresponding to the thumbnail picture selected from the optical disk 2 is reproduced under the control of the system control microcomputer 19, when it is reproducible, on the basis of the data of the index file stored in the built-in memory and management information of the management system. In this case, the content file reproduced from the optical disk 2 is acquired via the optical pickup 33, the modem 23, the error-collection encoder/decoder 21, and the memory controller 18. The reproduced content file is divided into the elementary streams of video data and audio data by the file decoder 16, and the elementary streams are decoded by the video decoder 13 and the audio decoder 14, respectively, and are output.

The index-file update process by the system control microcomputer 19 will be further described.

When a content file is recorded on the optical disk 2, as described above, the system control microcomputer 19 updates the index file so as to add the content file.

The index file includes the text file FTX, the thumbnail picture file FTH, and the property file FP, as described with reference to Fig. 9. In this embodiment, particularly, an index file including the property file FP, the thumbnail picture file FTH, and the text file (or a meta-data file) FTX is referred to as an AV-Index file.

The attribute information of each content file is divided into a text file, a thumbnail picture file, and a property file. Each file has continuous entries according to the attribute information of the content file. The entries each include one or a plurality of fixed-length slots. The entries each include a management information area.

The entries (parity entries) of the property file FP are each assigned a disk title and data indicative of the attribute of the content file. The entries of the property file FP have management information that specifies the corresponding entries of the text file FTX and the thumbnail picture file FTH. The entries of the property file FP each including a plurality of slots have management information that specifies a slot following the previous slot. The entries of the property file FP each have information that specifies the corresponding content file. Furthermore, the entries of the property file FP each have information that defines the hierarchical structure of the content file, existent folders, and virtual folders.

Each file has continuous fixed-length slots each managed by a slot number indicative of the order from the head of the file. The slot numbers have index information indicative of the order of the arrangement of the fixed-length slots of the file. The index file has a predetermined number of entries (management information areas) each including one or a plurality of slots. The entries are each identified by the number of the first fixed-length slot of the one or plurality of connected slots.

The entries of the property file FP each have slots as many as at least the slots assigned to the corresponding entries of the other files. For example, when the thumbnail picture file FTH and the text file FTX each have entries including two slots for one content file, the corresponding entry of the property file FP is assigned at least two slots.

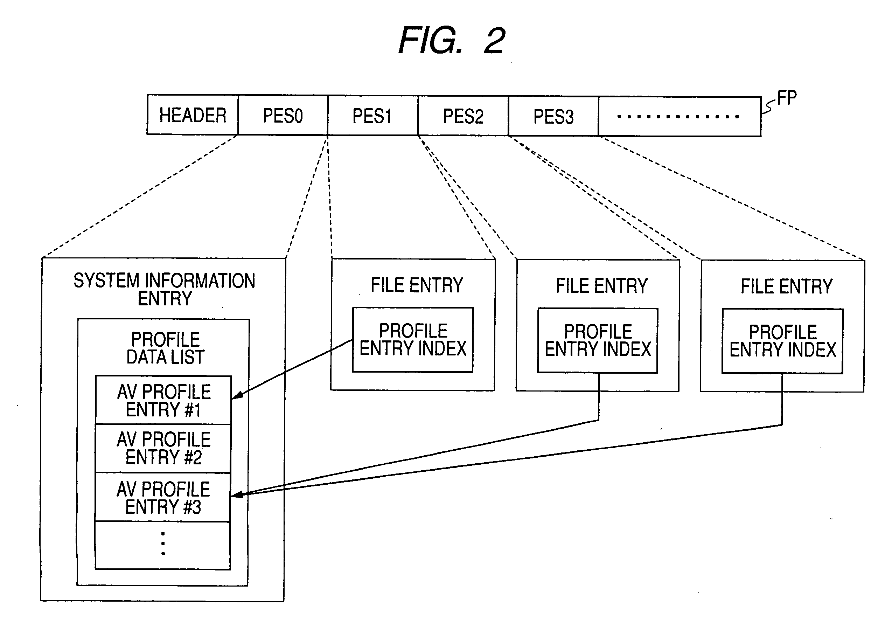

The property file FP has a system information entry following the header. Fig. 2 shows the structure of the property file FP. The system information entry has a decode-information storage area, in which all the decode information of the content files recorded on the optical disk 2 is stored.

As shown in Fig. 2, the property file FP has continuous entries corresponding to the content files following the system information entry. The entry corresponding to each content file is hereinafter referred to as "a file entry" as appropriate in contrast with the system information entry.

The file entry has a profile entry index indicative of decode information of a corresponding content file out of the decode information recorded on the system information entry. The profile entry index has pointer information.

The system information entry has a profile data list. The profile data list includes AV profile entries on which decode information is recorded by the number of the kinds of decode information of the content files recorded on the optical disk 2.

Fig. 2 shows an example in which video data and audio data are decoded by processing the content file corresponding to the first file entry on the basis of the decode information recorded on the first AV profile entry #1 of the profile data list. The example of Fig. 2 also shows that the video data and the audio data are decoded by processing the content files corresponding to the following two file entries on the basis of the decode information recorded on the third AV profile entry #3 of the profile data list.

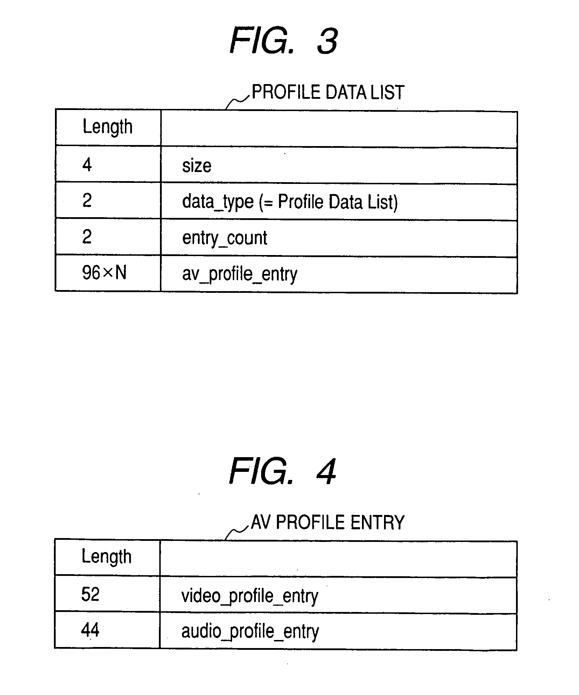

Fig. 3 shows the structure of the profile data list of the system information entry. In the profile data list, the first 4 bytes are assigned the size (size) of the data block of the profile data list, and the following 2 bytes are assigned the type, data_type (= Profile Data List), indicative of that the data block is a profile data list.

In this profile data list, the following 2 bytes are assigned the number of AV profile entries (entry_count) in the profile data list, and the following 96 x N bytes are each assigned a 96-byte AV profile entry (av_profile_entry) in sequence by the number N of the entries.

Fig. 4 shows the structure of the AV profile entry. The AV profile entry includes a video profile entry (video_profile_entry) that is decode information of video data and an audio profile entry (audio _profile_entry) that is decode information of audio data.

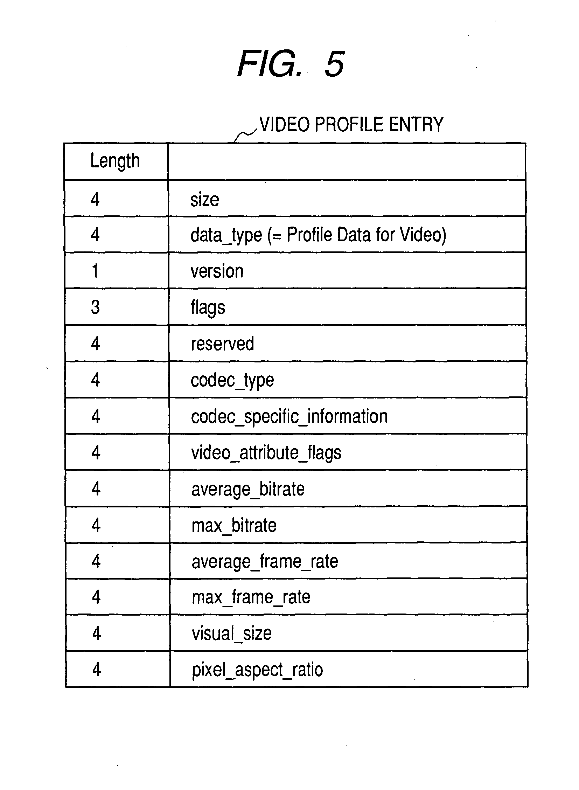

Fig. 5 shows the structure of the video profile entry. The video profile entry has a structure in which the first 4 bytes are assigned the size (size) of the data block of the video profile entry, and the following 4 bytes are assigned the type, data_type (= Profile Data for Video), indicative of that the data block is a video profile entry.

In the video profile entry, the following 1 byte is assigned the version (version) of the video profile entry; the following 3 bytes are assigned a flag (flags) that specifies the data type of the video profile entry; and the following 4 bytes are assigned a reserve (reserved).

In the video profile entry, the following 4 bytes are assigned data-compression format information (codec_type) of the video data, on which a format such as MPEG4 or AVC is recorded, and the following 4 bytes are assigned specific set information on the data-compression format (codec_specific_information), on which the level of the format and so on are recorded.

In the video profile entry, the following 4 bytes are assigned a video attribute flag (video_attribute_flags), on which the presence of security, the system of scanning and so on are recorded; and the following 4 bytes are assigned the average bit rate (average_bitrate), the maximum bit rate (max_bitrate), the average frame rate (average_frame_rate), the maximum frame rate (max_frame_rate), the number of horizontal and vertical samplings on one screen (visual_size), and the aspect ratio (pixel_aspect_ratio), respectively.

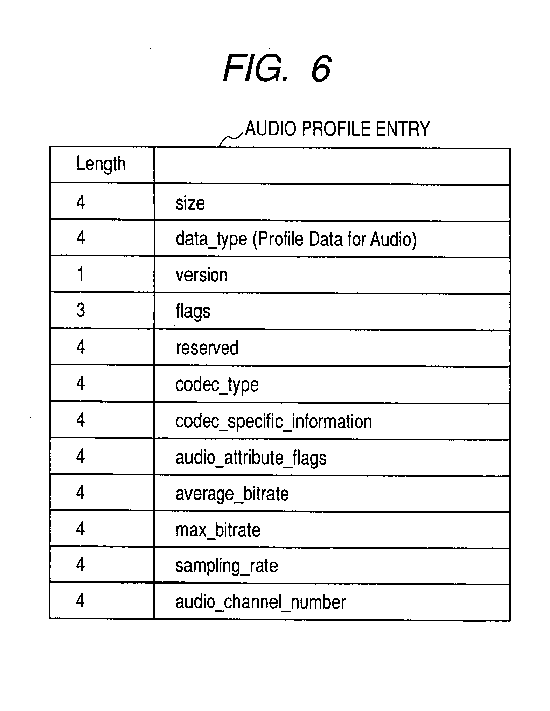

Fig. 6 shows the structure of the audio profile entry. The audio profile entry has a structure in which the first 4 bytes are assigned the size (size) of the data block of the audio profile entry, and the following 4 bytes are assigned the type, data_type (= Profile Data for Audio), indicative of that the data block is an audio profile entry.

In the audio profile entry, the following 1 byte is assigned the version (version) of the audio profile entry; the following 3 bytes are assigned a flag (flags) that specifies the data type of the audio profile entry; and the following 4 bytes are assigned a reserve (reserved).

In the audio profile entry, the following 4 bytes are assigned data-compression format information (codec_type) of the audio data, and the following 4 bytes are assigned specific set information on the data-compression format (codec_specific_information), on which the level of the format and so on are recorded.

In the audio profile entry, the following 4 bytes are assigned an audio attribute flag (Audio_attribute_flags), on which the presence of security, the system of scanning and so on are recorded; and the following 4 bytes are assigned the average bit rate (average_bitrate), the maximum bit rate (max_bitrate), the sampling rate (sampling_rate), and the number of channels of the audio data (audio_channel_number), respectively.

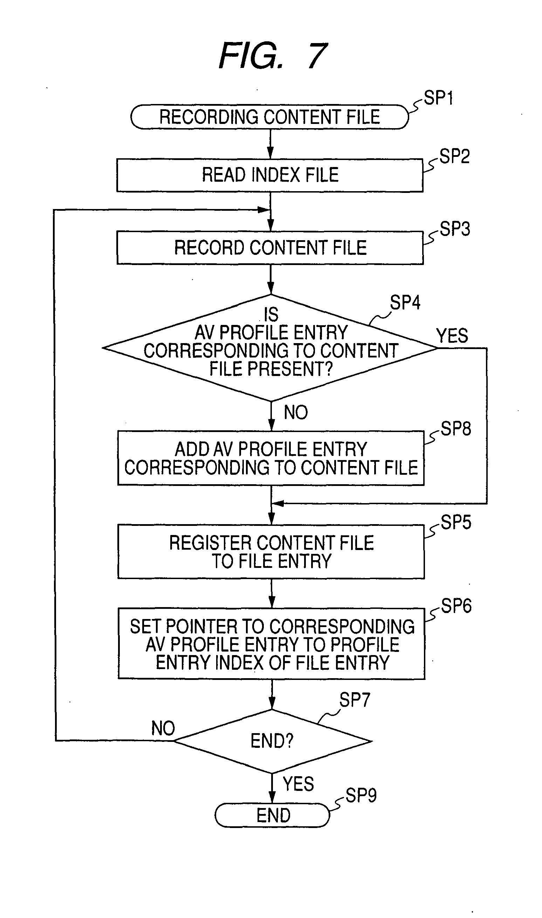

The flowchart of Fig. 7 shows the procedure of recording content files by the system control microcomputer 19.

When the optical disk 2 is loaded, the system control microcomputer 19 proceeds from step SP1 to step SP2. In step SP2, the system control microcomputer 19 acquires the index file recorded on the optical disk 2, and stores it in the built-in memory. In step SP3, the system control microcomputer 19 records a content file on the optical disk 2 according to the user operation.

Upon completion of the recording of the content file, at step SP4, the system control microcomputer 19 sequentially searches the AV profile entries recorded on the system information entry (see Fig. 2) of the index file on the basis of the decode information of the content file to determine whether the decode information of the specified content file has already been recorded on the system information entry.

At the determination, the system control microcomputer 19 first detects an AV profile entry that is determined to have been recorded in the same recording mode as that of the content file recorded on the optical disk 2 as follows:

The system control microcomputer 19 detects a video profile entry (video_profile_entry) in which the data-compression format information (codec_type), the specific set information on the format (codec_specific_information), the video attribute flag (video_attribute_flags), the number of horizontal and vertical samplings on one screen (visual_size), and the aspect ratio (pixel_aspect_ratio) correspond to the recorded content file.

Of the detected AV profile entries of the video profile entry, the system control microcomputer 19 finds an audio profile entry in which the audio-data-compression format information (codec_type), the specific set information on the format (codec_specific_information), the audio attribute flag (audio_attribute_flags), the sampling rate (sampling_rate), and the number of channels (audio_channel_number) correspond to the recorded content file.

The system control microcomputer 19 thus detects an AV profile entry that is determined to have been recorded in the same recording mode as that of the content file recorded on the optical disk 2.

The system control microcomputer 19 then rounds up predetermined digits of the bit rate and the frame rate of the recorded content file to thereby determine an AV profile entry whose bit rate and frame rate are the same as the rounded value from the found AV profile entries.

When the AV profile entries recorded on the system information entry include AV profile entries that are determined to have been recorded in the same recording mode as the recorded content file, and when the AV profile entries have the same bit rate and frame rate as the rounded bit rate and frame rate of the recorded content file, the system control microcomputer 19 determines that the decode information of the recorded content file (AV profile entry) has already been recorded on the system information entry.

Since the system control microcomputer 19 makes a determination including the round-up of the bit rate and the frame rate, a plurality of pieces of decode information having strictly different bit rates and frame rates can be expressed collectively. This reduces the number of the AV profile entries in the system information entry, thus reducing the size of the index file.

The round-up is executed by a device that reproduces a content file according to the bit rate and the frame rate recorded on the AV profile entry and a significant digit with which the recorded content file can be determined to be reproducible. For example, when the frame rate of the recorded content file is a frame frequency of 29.94 Hz, the system control microcomputer 19 detects an AV profile entry with a frame frequency of 30 Hz.

The system control microcomputer 19 may not make a determination including the round-up of the bit-rate and the frame rate, but may make a determination whether the decode information of the recorded content file has already been recorded on the system information entry, depending on whether there is a content file with completely the same bit rate and frame rate.

When it is determined at step SP4 that the decode information of the recorded content file has already been recorded on the system information entry, the system control microcomputer 19 proceeds from step SP4 to step SP5. At step SP5, the system control microcomputer 19 adds the entry of the recorded content file to the property file FP.

At step SP6, the system control microcomputer 19 sets a property entry index (pointer information) to the added file entry so as to indicate the AV profile entry of the recorded decode information which is detected by the process of step SP4. At step SP7, the system control microcomputer 19 determines whether the user has given an instruction to terminate the operation. When the instruction to terminate the operation is not given, the process returns from step SP7 to step SP3, wherein the following content file is recorded in response to the user operation. On the other hand, when an instruction to terminate the operation is given, the process ends at step S9.

When it is determined at step SP4 that the decode information of the recorded content file has not yet been recorded on the system information entry, the system control microcomputer 19 proceeds from step SP4 to step SP8. At step SP8, the system control microcomputer 19 creates an AV profile entry on the basis of the decode information of the recorded content file, and adds the AV profile entry to the profile data list.

At the following step SP5, the system control microcomputer 19 adds the entry of the content file to the property file FP. At the next step SP6, the system control microcomputer 19 sets a property entry index (pointer information) to the file entry added at step SP5 so as to indicate the AV profile entry added at step SP8.

The procedure of the flowchart in Fig. 7 is such that after a specified content file has been recorded on the optical disk 2, it is determined whether the decode information of the recorded content file has been recorded on the system information entry, wherein when the information has not been recorded, it is added. Alternatively, it may be determined whether the decode information of the content file has been recorded on the system information entry before the content file is recorded on the optical disk 2, wherein when it has not been recorded, it may be added and then the content file may be recorded on the optical disk 2.

In registering an AV profile entry to the system information entry, in place of the decode information of the recorded content file, decode information on the corresponding recording mode of another recording apparatus with different bit rate may be recorded. In this case, the recording apparatus is sometimes for general purpose use.

For example, an AV profile entry may be registered in correspondence with the profile level of a memory stick moving-image format. That is, when the recording level is specified by the format or rule (for example, when the recording level is specified at 128 kbps for level 1 and 256 kbps for level 2), even if a content file is recorded at 150 kbps by an actual device, not the 150 kbps but the upper limit 256 kbps of the bit rate for the moving format is registered to the AV profile entry.

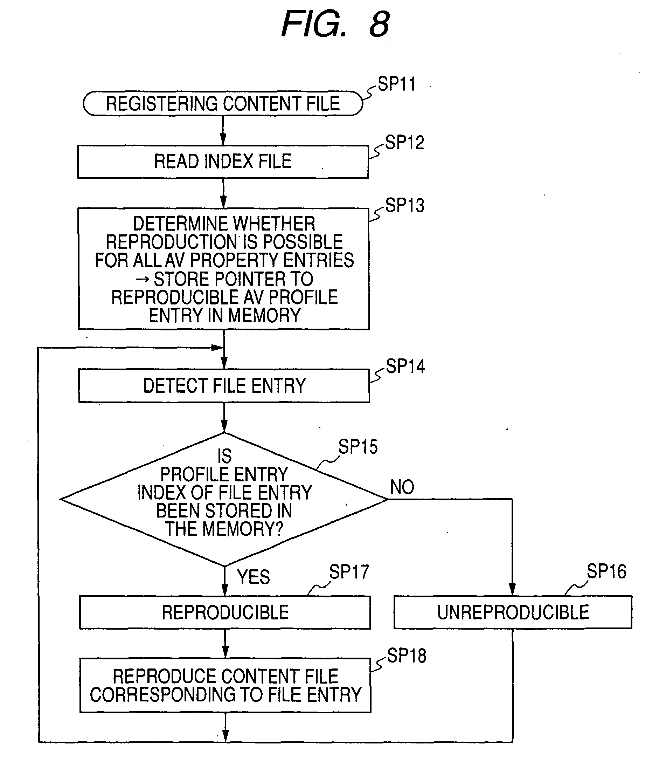

The flowchart of Fig. 8 shows the procedure of the system control microcomputer 19 in a content-file reproducing mode.

For example, when the optical disk 2 is loaded, the system control microcomputer 19 proceeds from step SP11 to step SP12. At step SP12, the system control microcomputer 19 acquires the index file recorded on the optical disk 2, and stores it in the built-in memory.

At step SP13, the system control microcomputer 19 determines whether the AV property entries recorded on the profile data list of the acquired index file can be processed according to the decode information recorded on the AV property entries.

That is, the system control microcomputer 19 determines whether the content file based on the AV property entries can be reproduced, and stores the determination in a predetermined storage area such as a built-in memory in association with the profile entry index serving as pointer information. In the embodiment, the system control microcomputer 19 stores a profile entry index indicative of an AV property entry that is determined to be reproducible in the built-in memory.

At the next step SP14, the system control microcomputer 19 accepts the selection of a content file to be reproduced according to user operation, and detects a corresponding file entry from the index file. For example, the system control microcomputer 19 accepts selection by the user by displaying the list of thumbnail pictures of the thumbnail picture file or the list of titles of the text file stored in the index file.

At the next step SP15, the system control microcomputer 19 determines whether the file entry detected from the index file has the profile entry index stored in the built-in memory at step SP13. When the system control microcomputer 19 determines that the file entry detected from the index file has not the profile entry index stored in the built-in memory, the procedure proceeds from step SP15 to step SP16.

At step SP16, the system control microcomputer 19 notifies the user that the content file cannot be reproduced, and then returns to step SP14. The notification to the user may adopt various ways including a message that the content file cannot be reproduced.

In contrast, when it is determined at step SP15 that the file entry detected from the index file has the profile entry index stored in the built-in memory, the system control microcomputer 19 proceeds from step SP15 to step SP17. At step SP17, the system control microcomputer 19 determines that the content file selected by the user can be reproduced, and at step SP18, controls the overall operation to reproduce the content file. After the content file has been reproduced, the system control microcomputer 19 returns to step SP14.

The procedure shown in Fig. 8 uses the result of determination at step SP13 for the determination at step SP15, that is, the result of determination whether the process based on the decode information recorded on the AV property entries on the profile data list of the index file can be executed, allowing high-speed determination of whether a content file can be reproduced. Alternatively, the determination at step SP13 may be omitted; it may be determined at step SP15 whether the process based on the decode information of the AV property entry indicated by the profile entry index set at the file entry corresponding to the content file can be executed, and then a determination whether the content file can be reproduced may be made.

With the optical disk unit 1 shown in Fig. 1, all the decode information of the content files recorded on the optical disk 2 is stored in the system information entry of the index file; and the entries (file entries) of the index file corresponding to the content files have profile entry index (pointer information) indicative of the corresponding AV profile entries (decode information) of the system information entry (decode-information storage area). Accordingly, the use of the optical disk unit 1 prevents duplicate recording of decode information on the index file, and allows decode information to be recorded without being coded. Therefore, detailed decode information of the content files can be recorded without a significant increase in the size of the index file.

With the optical disk unit 1 shown in Fig. 1, if an AV profile entry (decode information) corresponding to a content file to be registered is not recorded on the system information entry (decode-information storage area) at the time of updating the index file, an AV profile entry (decode information) corresponding to the content file is added. Therefore, the optical disk unit 1 is suitable also for recording a content file that does not correspond to the AV profile entries (decode information) in the system information entry (decode-information storage area) on the optical disk 2.

With the optical disk unit 1 shown in Fig. 1, at the time of reproducing a content file from the optical disk 2, it is determined whether the content file can be reproduced on the basis of the AV profile entry (decode information) of a system information entry (decode-information storage area) indicated by the profile entry index (pointer information) of an entry (file entry) of the index file corresponding to the content file. Accordingly, the optical disk unit 1 allows determination of reproducibility based on the AV profile entry (decode information) itself corresponding to the content file, leading to accurate determination whether the content file can be reproduced.

According to the procedure shown in Fig. 8, the determination of reproducibility is made for a content file selected by a user, wherein when it is determined to be reproduced, the content file is reproduced. It is also possible that only reproducible content files are displayed in list form in advance, from which the user selects a content file, and that unreproducible content files cannot be recognized by the user.

In the foregoing embodiment, the index file includes a text file FTX, a thumbnail picture file FTH, and a property file FP, and the attribute information of the content files are grouped and disposed in the respective files. However, the invention is not limited to that; it can also be applied to an index file composed of one file.

Although the foregoing embodiment is an application to the optical disk unit 1, the invention is not limited to that; it can be broadly applied to recoding of content files on various recording media such as a hard disk or a memory card, or read-only recording media.

In the foregoing embodiment, the encoder and the decoder are integrated to one. However, the invention is not limited to that; it may be broadly applied to a structure in which the encoder and the decoder are achieved by a software process, and a structure in which compressed video data and audio data are input and recorded from an external unit, and the encoder and the decoder are disposed in the external unit.

### Industrial Applicability

The invention allows decode information of content files to be recorded in detail without a significant increase in the size of the index file, thereby allowing accurate determination of the reproducibility of the content files. For example, the invention can be applied to an optical disk unit.

## Claims

1. A recording apparatus for recording a content file including at least encoded video data or encoded audio data and an index file for managing the content file and including a set of attribute information of the content file on a recording medium, the recording apparatus comprising:
a content-file recording section for recording the content file on the recording medium; and
an index-file updating section for updating the index file so as to register a desired content file when the content file is recorded on the recording medium by the content-file recording section; wherein
the index file includes a predetermined number of entries corresponding to the content file recorded on the recording medium and assigned the attribute information of the corresponding content file and a decode-information storage area for storing decode information of the content file;
the predetermined number of entries have pointer information indicative of decode information of the corresponding content file from among the decode information stored in the decode-information storage area; and
the index-file updating section adds an entry to the index file when updating the index file so as to register the content file, the entry being corresponding to the content file and having pointer information indicative of the decode information of the content file stored in the decode-information storage area.

2. The recording apparatus according to Claim 1, wherein
when updating the index file so as to register the desired content file, the index-file updating section adds the decode information of the content file to the decode-information storage area when the decode information of the content file is not stored in the decode-information storage area.

3. The recording apparatus according to Claim 2, wherein
when decode information is stored in the decode-information storage area, the decode information being different in bit rate or frame rate from the decode information of the desired content file and having a bit rate or a frame rate that is obtained by rounding up a predetermined digit of the bit rate or the frame rate of the decode information of the content file, the index-file updating section determines that decode information of the content file is stored in the decode-information storage area.

4. A method for recording a content file including at least encoded video data or encoded audio data and an index file for managing the content file and including a set of attribute information of the content file on a recording medium, the method comprising:
a content-file recording step of recording the content file on the recording medium; and
an index-file updating step of updating the index file so as to register a desired content file when the content file is recorded on the recording medium at the content-file recording step; wherein
the index file includes a predetermined number of entries corresponding to the content file recorded on the recording medium and assigned the attribute information of the corresponding content file and a decode-information storage area for storing decode information of the content file;
the predetermined number of entries have pointer information indicative of decode information of the corresponding content file from among the decode information stored in the decode-information storage area; and
at the index-file updating step, an entry is added to the index file when updating the index file so as to register the content file, the entry being corresponding to the content file and having pointer information indicative of the decode information of the content file stored in the decode-information storage area.

5. A program for a computer to execute a method for recording a content file including at least encoded video data or encoded audio data and an index file for managing the content file and including a set of attribute information of the content file on a recording medium, the method comprising:
a content-file recording step of recording the content file on the recording medium; and
an index-file updating step of updating the index file so as to register a desired content file when the content file is recorded on the recording medium at the content-file recording step; wherein
the index file includes a predetermined number of entries corresponding to the content file recorded on the recording medium and assigned the attribute information of the corresponding content file and a decode-information storage area for storing decode information of the content file;
the predetermined number of entries have pointer information indicative of decode information of the corresponding content file from among the decode information stored in the decode-information storage area; and
at the index-file updating step, an entry is added to the index file when updating the index file so as to register the content file, the entry being corresponding to the content file and having pointer information indicative of the decode information of the content file stored in the decode-information storage area.

6. A computer-readable recording medium on which a program is recorded, the program being for a computer to execute a method for recording a content file including at least encoded video data or encoded audio data and an index file for managing the content file and including a set of attribute information of the content file on a recording medium, the method comprising:
a content-file recording step of recording the content file on the recording medium; and
an index-file updating step of updating the index file so as to register a desired content file when the content file is recorded on the recording medium at the content-file recording step; wherein
the index file includes a predetermined number of entries corresponding to the content file recorded on the recording medium and assigned the attribute information of the corresponding content file and a decode-information storage area for storing decode information of the content file;
the predetermined number of entries have pointer information indicative of decode information of the corresponding content file from among the decode information stored in the decode-information storage area; and
at the index-file updating step, an entry is added to the index file when updating the index file so as to register the content file, the entry being corresponding to the content file and having pointer information indicative of the decode information of the content file stored in the decode-information storage area.

7. A reproducing apparatus for reproducing a desired content file from a recording medium on which a content file including at least encoded video data or encoded audio data and an index file for managing the content file and including a set of attribute information of the content file are recorded, wherein
the index file includes a predetermined number of entries corresponding to the content file recorded on the recording medium and assigned the attribute information of the corresponding content file and a decode-information storage area for storing all the decode information of the content file; and
the predetermined number of entries have pointer information indicative of decode information of the corresponding content file from among the decode information stored in the decode-information storage area; and wherein the reproducing apparatus comprises:
a content-file reproducing section for reproducing a desired content file from the recording medium to acquire video data or audio data contained in the content file; and
an index-file reproducing section for reproducing the index file from the recording medium;
wherein the content-file reproducing section determines whether the content file can be reproduced with reference to the decode information on the basis of the pointer information.

8. The reproducing apparatus according to Claim 7, wherein the content-file reproducing section determines whether the content file can be reproduced for each decode information stored in the decode-information storage area of the index file reproduced by the index-file reproducing section, and stores the result of determination in a predetermined storage area in association with the corresponding pointer information; and when reproducing a desired content file from the recording medium, the content-file reproducing section determines whether the content file can be reproduced on the basis of the determination result stored in the predetermined storage area in association with the pointer information of the entry of the index file corresponding to the content file.

9. A method for reproducing a desired content file from a recording medium on which a content file including at least encoded video data or encoded audio data and an index file for managing the content file and including a set of attribute information of the content file are recorded, wherein
the index file includes a predetermined number of entries corresponding to the content file recorded on the recording medium and assigned the attribute information of the corresponding content file and a decode-information storage area for storing all decode information of the content file; and
the predetermined number of entries have pointer information indicative of decode information of the corresponding content file from among the decode information stored in the decode-information storage area, and wherein the method comprises:
a content-file reproducing step of reproducing a desired content file from the recording medium to acquire video data or audio data contained in the content file; and
an index-file reproducing step of reproducing the index file from the recording medium;
wherein at the content-file reproducing step, it is determined whether the content file can be reproduced with reference to the decode information on the basis of the pointer information.

10. A program for a computer to execute a method for reproducing a desired content file from a recording medium on which a content file including at least encoded video data or encoded audio data and an index file for managing the content file and including a set of attribute information of the content file are recorded, wherein
the index file includes a predetermined number of entries corresponding to the content file recorded on the recording medium and assigned the attribute information of the corresponding content file and a decode-information storage area for storing all decode information of the content file; and
the predetermined number of entries have pointer information indicative of decode information of the corresponding content file from among the decode information stored in the decode-information storage area, and wherein the method comprises:
a content-file reproducing step of reproducing a desired content file from the recording medium to acquire video data or audio data contained in the content file; and
an index-file reproducing step of reproducing the index file from the recording medium;
wherein at the content-file reproducing step, it is determined whether the content file can be reproduced with reference to the decode information on the basis of the pointer information.

11. A computer-readable recording medium on which a program is recorded, the program being for a computer to execute a method for reproducing a desired content file from a recording medium on which a content file including at least encoded video data or encoded audio data and an index file for managing the content file and including a set of attribute information of the content file are recorded, wherein
the index file includes a predetermined number of entries corresponding to the content file recorded on the recording medium and assigned the attribute information of the corresponding content file and a decode-information storage area for storing all decode information of the content file; and
the predetermined number of entries have pointer information indicative of decode information of the corresponding content file from among the decode information stored in the decode-information storage area, and wherein the method comprises:
a content-file reproducing step of reproducing a desired content file from the recording medium to acquire video data or audio data contained in the content file; and
an index-file reproducing step of reproducing the index file from the recording medium;
wherein at the content-file reproducing step, it is determined whether the content file can be reproduced with reference to the decode information on the basis of the pointer information.

12. A recording medium on which a content file including at least encoded video data or encoded audio data and an index file for managing the content file and including a set of attribute information of the content file are recorded, wherein
the index file includes a predetermined number of entries corresponding to the content file and assigned the attribute information of the corresponding content file and a decode-information storage area for storing all the decode information of the content file; and
the predetermined number of entries have pointer information indicative of decode information of the corresponding content file from among the decode information stored in the decode-information storage area.
